Europäisches Patentamt

European Patent Office

Office européen des brevets

(11) Numéro de publication: **0 314 556 B1**

# FASCICULE DE BREVET EUROPEEN

(45) Date de publication de fascicule du brevet: **21.10.92**  (51) Int. Cl.⁵: **G11B 5/53**, G11B 15/61

(21) Numéro de dépôt: **88402672.5**

(22) Date de dépôt: **24.10.88**

(54) **Tête d'enregistrement/lecture vidéo, procédé de réalisation et appareil mettant en oeuvre ce procédé.**

(30) Priorité: **27.10.87 FR 8714819**

(43) Date de publication de la demande:
**03.05.89 Bulletin 89/18**

(45) Mention de la délivrance du brevet:
**21.10.92 Bulletin 92/43**

(84) Etats contractants désignés:
**DE GB IT NL**

(56) Documents cités:
**EP-A- 0 123 826**
**US-A- 3 614 831**

**PATENT ABSTRACTS OF JAPAN, vol. 3, no. 5 (E-84), 18 janvier 1979, page 110 E 84; & JP-A-53 132 322**

**PATENT ABSTRACTS OF JAPAN, vol. 10, no. 241 (P-488)[2297], 20 août 1086, page 89 P 488; & JP-A-61 71 447**

**PATENT ABSTRACTS OF JAPAN, vol. 6, no. 75 (P-114)[953], 12 mai 1982, page 56 P 114; & JP-A-57 12 449**

(73) Titulaire: **THOMSON-CSF**
**51, Esplanade du Général de Gaulle**
**F-92800 Puteaux(FR)**

(72) Inventeur: **Meunier, Paul-Louis**
**THOMSON-CSF SCPI 19, avenue de Messine**
**F-75008 Paris(FR)**
Inventeur: **Mackowski, Jean-Marie**
**THOMSON-CSF SCPI 19, avenue de Messine**
**F-75008 Paris(FR)**
Inventeur: **Rolland, Jean-Luc**
**THOMSON-CSF SCPI 19, avenue de Messine**
**F-75008 Paris(FR)**

(74) Mandataire: **Chaverneff, Vladimir et al**
**THOMSON-CSF SCPI**
**F-92045 PARIS LA DEFENSE CEDEX 67(FR)**

## Description

L'invention concerne une tête d'enregistrement/lecture vidéo et plus particulièrement une tête d'enregistrement comportant une couche de protection contre toute usure due à la bande d'enregistrement magnétique. Elle concerne également un procédé de réalisation d'une telle tête ainsi qu'un appareil permettant de mettre en oeuvre ce procédé.

Actuellement les têtes magnétiques de type vidéo familiale (VHS) sont soumises aux frottements de la bande qui défile à la vitesse de 5 ms$^{-1}$. Ceci produit une usure du substrat de la tête et donc des pôles de l'ordre de 20 micromètres pour 2000 h d'utilisation. Ces têtes sont au nombre de 2 minimum et montées diamétralement opposées sur un tambour de diamètre de quelques centimètres. Le tambour est usiné de fines rayures hélicoïdales (200 micromètres de profondeur) afin d'aspirer la bande sur sa surface et qu'aucun film d'air ne puisse empêcher le contact de la bande sur la tête. Ce tambour subit une érosion, surtout les sillons inscrits. Cette érosion produit des déchets de matière, telle que poudre métallique provenant du tambour, qui peuvent constituer une poudre abrasif à l'égard des têtes magnétiques et aggravant les causes d'usure des têtes magnétiques.

D'autre part, la bande voit une discontinuité de matériau, en général une discontinuité entre le tambour qui est en aluminium et les têtes magnétiques qui sont en ferrite. Ces discontinuités se traduisent par des différences d'adhérences pouvant donner lieu à des frottements plus accentués sur le tambour ou sur les têtes magnétiques.

De plus les têtes magnétiques sont placées dans des logement prévus dans le tambour. Ces logements créent des tourbillons autour de la tête qui accentuent les différences d'adhérence.

Les documents US-A-3 614 831, JP-A-6 171 447, JP-A-5 712 449 et JP-A-53 132 322 fournissent des solutions qui ne permettent pas de résoudre tous ces problèmes.

L'invention fournit une solution pour éviter l'usure du tambour et des têtes magnétiques et pour supprimer les différences d'adhérences pouvant exister entre la bande magnétique et le tambour, d'une part, et entre la bande magnétique et les têtes magnétiques, d'autre part.

L'invention concerne un procédé de réalisation d'une tête d'enregistrement/lecture vidéo comportant un tambour (1) incorporant une pluralité de têtes magnétiques (2,3,4,5), caractérisé en ce qu'il est réalisé par une technique de dépôt plasma sous un champ électrique créé radialement autour de la tête d'enregistrement/lecture vidéo, celle-ci étant placée à l'intérieur d'une enceinte conductrice dont la paroi intérieure constitue une électrode cylindrique et est portée à un premier potentiel tandis que la surface extérieure du tambour de la tête d'enregistrement/lecture et les têtes magnétiques sont portées à un deuxième potentiel.

Enfin l'invention concerne un appareil de dépôt de couches anti-usure pour tête d'enregistrement/lecture vidéo, caractérisé en ce qu'il comporte une chambre à plasma comprenant au moins une électrode cylindrique portée à un premier potentiel, des orifices d'entrée de gaz ionisés ainsi qu'un moyen de support axial, porté à un second potentiel, permettant de maintenir au moins une tête d'enregistrement/lecture vidéo selon l'axe de l'électrode cylindrique et de lui appliquer ledit second potentiel.

Les différents objets et caractéristiques de l'invention apparaîtront plus clairement dans la description qui va suivre, faite à titre d'exemple, en se reportant aux figures annexées qui représentent :

- la figure 1, un exemple de réalisation d'une vue générale d'une tête d'enregistrement/lecture vidéo selon l'invention ;
- la figure 2, une coupe partielle de la tête de la figure 1 ;
- les figures 3 et 4, des exemples d'appareils selon l'invention permettant de réaliser une ou plusieurs têtes du type de celle de la figure 1.

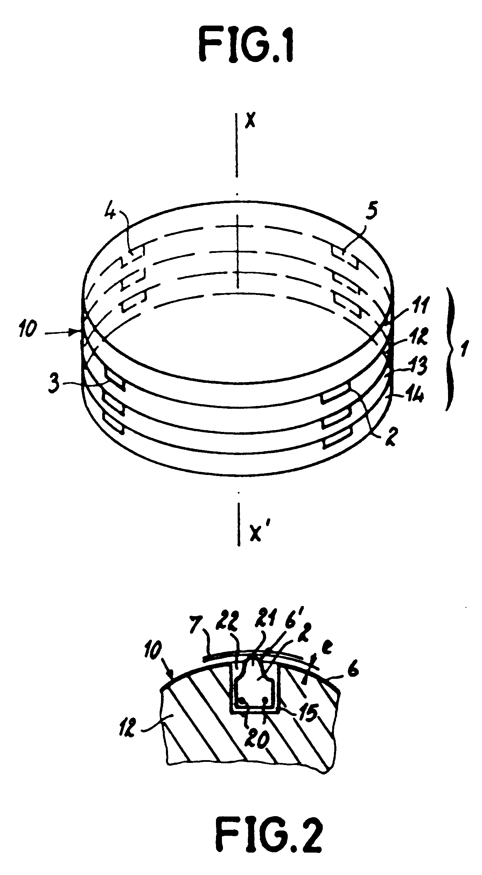

En se reportant à la figure 1, on va tout d'abord décrire un exemple de réalisation d'une tête d'enregistrement/lecture vidéo selon l'invention.

Cette tête comporte un tambour 1 constitué par l'assemblage selon un même axe XX′ de plusieurs plaques cylindriques 11, 12, 13, 14. Ces plaques comportent des têtes magnétiques telles que 2, 3, 4, 5 dont la surface active d'enregistrement émerge légèrement de la surface cylindrique 10 du tambour 1.

Comme cela est représenté par la coupe partielle de la figure 2, chaque tête magnétique telle que 2 est placée dans une cavité 15 d'une plaque cylindrique 12. Elle est fixée dans cette cavité à l'aide de vis 20, par exemple.

La surface 10 du tambour est revêtue dans sa totalité par une couche 6 d'un matériau anti-abrasion. Ce matériau anti-abrasion recouvre également la surface de chaque tête magnétique, qui émerge de la surface du tambour, sous la forme d'une couche 6′.

Le dépôt d'une couche anti-abrasion appliqué à une tête d'enregistrement/lecture est une technique connue. Cependant, l'application de cette technique à la totalité de la tête, fournit une structure globale différente qui procure les différents avantages suivants :

- absence d'usure du tambour et donc de déchets abrasifs, dus à cette usure, pouvant accroître l'usure des têtes ;
- homogénéité des matériaux que rencontre le support d'enregistrement 7 frottant sur le tambour et les têtes magnétiques ;
- émergence, e sur la figure 2, des têtes magnétiques (2) pouvant être réduite ce qui permet de réduire les turbulences pouvant se produire dans la zone telle que 22 voisinant chaque tête magnétique, cette émergence pouvant être réduite par exemple de 20 micromètres à 5 micromètres.

Une tête magnétique d'enregistrement/lecture ainsi décrite présente une symétrie de révolution. Ceci va être exploité pour le dépôt de la couche de matériau anti-abrasion. Un ou plusieurs tambour 1 munis de leurs têtes magnétiques sont placés selon un axe XX' dans une chambre de dépôts où elles sont montées et azimuthées.

Cette chambre de dépôt peut-être soit une chambre à plasma, soit par pulvérisation ionique réactive.

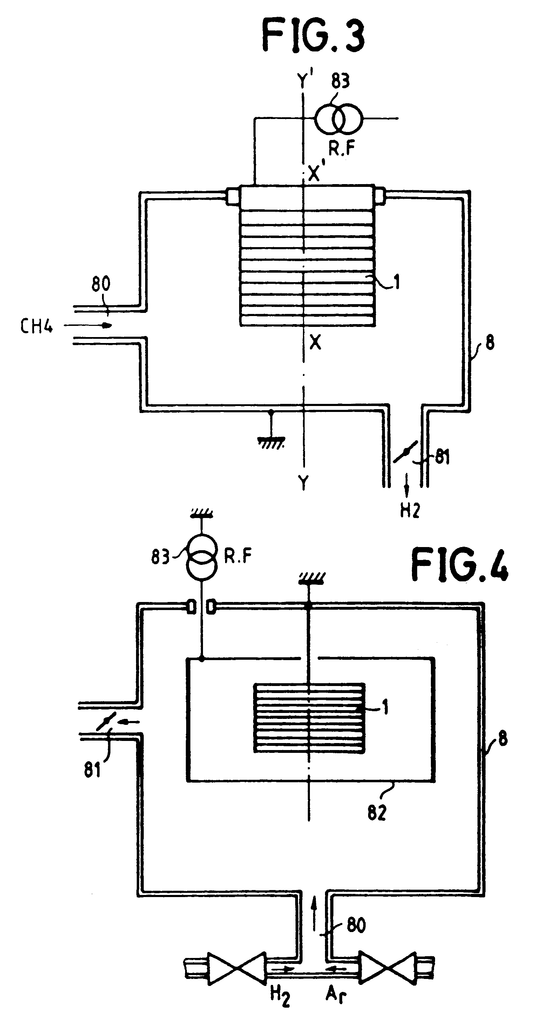

La figure 3 représente un appareil de dépôt permettant de réaliser un dépôt plasma selon le procédé de l'invention.

Cet appareil comporte une chambre cylindrique 8 tenant lieu d'électrode et d'axe YY'.

Cette chambre comporte au moins une entrée de gaz 80, utilisée pour le dépôt à réaliser, du $CH_4$ par exemple.

Selon l'axe YY', sont placés un tambour 1 ou un empilement de tambours dont l'axe XX' est fixé par des moyens non représentés selon l'axe YY'.

Un générateur de tension électrique 83 (de fréquence 13,56 MHz par exemple) est connecté électriquement au tambour 1 et à l'électrode 8. Il applique un potentiel négatif par exemple au tambour 1 et un potentiel positif à l'électrode 8.

La chambre possède une sortie 81 appelée sortie de pompage pour l'hydrogène.

Le dépôt plasma radial comporte un avantage par rapport au dépôt plasma plan en raison du fait que la capacité ou facteur capacitif entre les armatures varie en $1/\log r$ au lieu de $1/r$ ce qui permet de déposer avec plus d'énergie. Dans ces relations, r représente la distance entre les électrodes planes dans le cas d'un dépôt plasma plan ou la distance entre la surface d'un tambour et l'électrode cylindrique dans le cas d'un dépôt plasma radial.

De plus, ceci constitue une approche très fidèle de l'holocathode. En effet le champ épouse la forme du tambour plus tête, ce qui ne crée pas de survoltage local (effet de pointe électrostatique) qui entraîne une inhomogénéité dans le dépôt.

Un appareil pour pulvérisation ionique réactive comporte, comme représenté en figure 4, une chambre 8 comportant une entrée 80 pour introduire des gaz tel que de l'hydrogène et de l'argon et une sortie 81 pour le pompage des gaz. Une électrode cylindrique 82 comportant du carbone est portée à un potentiel négatif par un générateur RF (83) tandis que le tambour 1 à recouvrir, maintenu par des moyens non représentés selon l'axe de l'électrode 82, est au potentiel de la terre.

Selon l'invention, le tambour 1 est donc un matériau conducteur de l'électricité ou est revêtu d'une couche conductrice.

Le procédé de dépôt de couche antiabrasion peut également être réalisé sur tambour tournant.

L'avantage du procédé de l'invention est :
- De pouvoir traiter in situ les têtes déjà montées, - De faire un enrobage homogène,
- De réaliser un grand nombre de tambour par la souplesse du système et de concevoir ainsi les chambres adéquates,
- De réduire l'émergence de la tête, de supprimer les sillons sur le tambour,
- De supprimer voire réduire l'usure du tambour, et de fabriquer celui-ci dans un matériau de densité inférieure à celle des tambours existants et de réduire ainsi les difficultés d'équilibrage du système mécanique.

La situation de l'empilement, dont la forme avoisine l'holocathode rend les dépôts plasma très réguliers et dépourvus de gradient de contrainte.

Il est bien évident que la description qui précède n'a été faite qu'à titre d'exemple non limitatif. D'autres variantes peuvent être envisagées sans sortir du cadre de l'invention. Notamment les exemples numériques n'ont été fournis que pour illustrer la description.

**Revendications**

1. Procédé de réalisation d'une tête d'enregistrement/lecture vidéo comportant un tambour (1) incorporant une pluralité de têtes magnétiques (2,3,4,5) caractérisé en ce qu'il est réalisé par une technique de dépôt sous un champ électrique créé radialement autour de la tête d'enregistrement/lecture vidéo, celle-ci étant placée à l'intérieur d'une enceinte conductrice dont la paroi intérieure constitue une électrode cylindrique (8, 82) et est portée à un premier potentiel tandis que la surface extérieure du tambour (10), la tête d'enregistrement/lecture et les têtes magnétiques (2,3,4,5) sont portées à un deuxième potentiel.

2. Appareil de dépôt de couches anti-usure pour tête d'enregistrement/lecture vidéo caractérisé en ce qu'il comporte une chambre à plasma comprenant au moins une électrode cylindrique (8, 82) portée à un premier potentiel, des orifices d'entrée de gaz ionisés ainsi qu'un moyen de support axial, porté à un second potentiel, permettant de maintenir au moins une tête d'enregistrement/lecture vidéo selon l'axe (XX') de l'électrode cylindrique (8, 82) et de lui appliquer ledit second potentiel.

## Claims

1. Method of producing a recording/playback video head consisting of a drum (1) incorporating a plurality of magnetic heads (2, 3, 4, 5) characterised in that it is produced by a technique of deposition under an electric field created radially around the recording/playback video head, the latter being placed inside a conducting enclosure whose inner wall constitutes a cylindrical electrode (8, 82) and is brought to a first potential while the outer surface of the drum (10), the recording/playback head and the magnetic heads (2, 3, 4, 5) are brought to a second potential.

2. Apparatus for the deposition of anti-wear coatings for a recording/playback video head characterised in that it consists of a plasma chamber comprising at least one cylindrical electrode (8, 82) brought to a first potential, inlet ports for ionised gases and a means of axial support, brought to a second potential, enabling at least one recording/playback video head to be maintained along the axis (XX') of the cylindrical electrode (8, 82) and enabling the said second potential to be applied to it.

## Patentansprüche

1. Verfahren zur Verwirklichung eines Video-Aufnahme/Wiedergabe-Kopfes mit einer Trommel (1), die mehrere Magnetköpfe (2, 3, 4, 5) enthält, dadurch gekennzeichnet, daß es durch eine Technik verwirklicht wird, bei welcher eine Ablagerung unter einem elektrischen Feld erfolgt, das radial um den Video-Aufnahme/Wiedergabe-Kopf erzeugt wird, welcher im Inneren einer leitfähigen Kammer angeordnet wird, deren Innenwandung eine zylindrische Elektrode (8, 82) bildet und auf ein erstes Potential gelegt wird, während die äußere Oberfläche der Trommel (10) des Aufnahme/Wiedergabe-Kopfes und die Magnetköpfe (2, 3, 4, 5) auf ein zweites Potential gelegt werden.

2. Gerät zum Ablagern von Verschleißschutz-Schichten für Video-Aufnahme/Wiedergabe-Kopf, dadurch gekennzeichnet, daß es eine Plasma-Kammer enthält, die wenigstens eine zylindrische Elektrode (8, 82) aufweist, die auf ein erstes Potential gelegt ist, Eintrittsöffnungen für ein ionisiertes Gas aufweist sowie ein auf ein zweites Potential gelegtes Mittel zur axialen Halterung aufweist, das es ermöglicht, wenigstens einen Video-Aufnahme/Wiedergabe-Kopf in der Achse (XX') der zylindrischen Elektrode (8, 82) zu halten und das Zweite Potential an diesen anzulegen.

# FIG.1

# FIG.2

EP 0 314 556 B1

# FIG.3

# FIG.4

6